# EUROPÄISCHE PATENTSCHRIFT

(11) **EP 2 331 383 B1**
(45) Veröffentlichungstag und Bekanntmachung des Hinweises auf die Patenterteilung: **13.02.2013**
(21) Anmeldenummer: 09778479.7
(22) Anmeldetag: 08.09.2009
(51) Int. Cl.: B62D 5/04

(54) **VORRICHTUNG UND VERFAHREN ZUR STEUERUNG EINER ELEKTRISCHEN LENKUNG**
DEVICE AND METHOD FOR CONTROLLING AN ELECTRIC STEERING SYSTEM
DISPOSITIF ET PROCÉDÉ DE COMMANDE D UNE DIRECTION ÉLECTRIQUE

(30) Priorität: 25.09.2008 DE 102008048952
(43) Veröffentlichungstag der Anmeldung: 15.06.2011
(73) Patentinhaber: Volkswagen Aktiengesellschaft, 38440 Wolfsburg (DE); Audi AG, 85045 Ingolstadt (DE)
(72) Erfinder: SCHÖTTLER, Frank, 38102 Braunschweig (DE); BUSSE, Carsten, 38444 Wolfsburg (DE); HAUSSMANN, Heiko, 38118 Braunschweig (DE); MÜLLER Rolf, 85055 Ingolstadt, (DE); SCHULLER Jürgen Dr., 85055 Ingolstadt, (DE)
(86) Internationale Anmeldenummer: PCT/EP2009/006602
(87) Internationale Veröffentlichungsnummer: WO 2010/034415

(56) Entgegenhaltungen:
- EP-A2- 0 536 590
- DE-A1-102005 044 629

## Beschreibung

Die Erfindung betrifft eine Vorrichtung und ein Verfahren zur Steuerung einer elektrischen Lenkung.

Bekannte Vorrichtungen zur Steuerung einer elektrischen Lenkung umfassen einen Haupt-Rechner, eine Leistungselektronik, mindestens einen Sensor zur Erfassung eines Drehmoments an einer Lenkstange sowie mindestens einen Rechner zur Aufbereitung der Sensordaten für den Haupt-Rechner, wobei der Haupt-Rechner in Abhängigkeit der aufbereiteten Sensordaten die Leistungselektronik zur Erzeugung von Steuersignalen für einen elektrischen Servomotor ansteuert. Ein Problem bei elektrischen Lenkungen ist, dass bei einem Fehler die elektrische Lenkung abgeschaltet werden muss. Diese harten Abschalter sind jedoch für den Fahrer irritierend, wenn schlagartig die Lenkunterstützung entfällt. Daher wird es angestrebt, diese harten Abschalter auf ein Minimum zu beschränken.

Aus der DE 10 2005 044 629 A1 ist eine Elektromotorregelung z. B. für eine elektrische Lenkunterstützung bekannt, bei der im Falle eines Auftretens eines Fehlers eine Sicherheitseinrichtung ein pulsweitenmoduliertes Signal an einen MOS-Treiber anlegt, so dass die Stromstärke, die dem Elektromotor zum Zeitpunkt des Auftretens des Fehlers eingeprägt wurde, mit definiertem Zeitverhalten gegen Null geht. Auf diese Weise wird die Servounterstützung der Lenkkraft kontinuierlich verringert.

Der Erfindung liegt ausgehend von diesem Stand der Technik das technische Problem zugrunde, eine Vorrichtung und ein Verfahren zur Steuerung einer elektrischen Lenkung zu schaffen, mittels derer die elektrische Lenkunterstützung seltener und insbesondere nicht schlagartig abgeschaltet werden muss, sondern ein Notlaufbetrieb aufrechterhalten werden kann.

Die Lösung des technischen Problems ergibt sich durch die Gegenstände mit den Merkmalen der Ansprüche 1 und 8. Weitere vorteilhafte Ausgestaltungen der Erfindung ergeben sich aus den Unteransprüchen.

Hierzu umfasst die Vorrichtung zur Steuerung einer elektrischen Lenkung einen Haupt-Rechner, eine Leistungselektronik, mindestens einen Sensor zur Erfassung eines Drehmomentes an einer Lenkstange sowie mindestens einen Rechner zur Aufbereitung der Sensordaten für den Haupt-Rechner, wobei der Haupt-Rechner in Abhängigkeit der aufbereiteten Sensordaten die Leistungselektronik zur Erzeugung von Steuersignalen für einen elektrischen Servomotor ansteuert, wobei bei einem Fehler des Haupt-Rechners der Rechner zur Aufbereitung der Sensordaten die Leistungselektronik für einen Notlaufbetrieb ansteuert. Der Notlaufbetrieb ermöglicht dabei einen zeitlich und/oder leistungstechnisch begrenzten Betrieb der elektrischen Lenkung, so dass ein hartes Abschalten nicht notwendig ist und der Kraftfahrzeugführer genügend Zeit hat, um das Kraftfahrzeug mit Lenkunterstützung kontrolliert zum Halten zu bringen. Dabei wird der Kraftfahrzeugführer vorzugsweise optisch und/oder akustisch über den einsetzenden Notlaufbetrieb und gegebenenfalls die verbleibende Zeit der Lenkunterstützung informiert. Dabei kann vorgesehen sein, dass der Rechner zur Aufbereitung der Sensordaten permanent die Signale für die Leistungselektronik erzeugt, die dann aber erst im Notlaufbetrieb auf die Leistungselektronik geschaltet werden, oder aber die Signale werden erst mit einsetzendem Notlaufbetrieb erzeugt. Ersteres hat den Vorteil einer schnellen Umschaltung, jedoch auf Kosten einer höheren Rechnerauslastung. Die Umschaltung kann dabei verschiedenartig erfolgen. Beispielsweise kann ein Multiplexer umgeschaltet werden.

In einer bevorzugten Ausführungsform überwacht im Normalbetrieb der Haupt-Rechner den Rechner zur Aufbereitung der Sensordaten, wobei bei Ausfall eines Überwachungssignals der Rechner zur Aufbereitung der Sensordaten auf den Notlaufbetrieb umschaltet. Beispielsweise übermittelt der Haupt-Rechner periodisch ein Anfrage-Signal an den Rechner zur Aufbereitung der Sensordaten, der dann über seinen Zustand ein Antwort-Signal an den Haupt-Rechner zurück übermittelt.

In einer weiteren bevorzugten Ausführungsform umfasst der elektrische Servomotor einen Resolver, der im Normalbetrieb vom Haupt-Rechner und im Notlaufbetrieb vom Rechner zur Aufbereitung der Sensordaten angesteuert wird. Für die Erzeugung und Umschaltung des Ansteuersignals kann auf die Ausführungen zum Signal für die Leistungselektronik Bezug genommen werden.

In einer weiteren bevorzugten Ausführungsform ist dem Haupt-Rechner ein Überwachungsrechner zugeordnet, wobei bei einem Ausfall des Überwachungsrechners auf den Notlaufbetrieb umgeschaltet wird. Dabei kann der Notlaufbetrieb wie zuvor beschrieben durch den Rechner zur Aufbereitung der Sensordaten erfolgen. Alternativ kann in diesem Fall aber auch vorgesehen sein, den Notlaufbetrieb durch den Haupt-Rechner durchzuführen. In diesem Fall muss nur sichergestellt werden, dass der Abschaltpfad des Überwachungsrechners deaktiviert wird.

In einer weiteren bevorzugten Ausführungsform umfasst die Vorrichtung einen zweiten Sensor zur Erfassung eines Drehmomentes an einer Lenkstange sowie einen zweiten Rechner zur Aufbereitung der Sensordaten des weiteren Sensors. Neben der Redundanz für die Sensordaten kann bedarfsweise der zweite Rechner auch für den Notlaufbetrieb konzipiert sein, so dass der Notlaufbetrieb mittels des ersten oder des zweiten Rechners erfolgen kann.

In einer weiteren bevorzugten Ausführungsform ist dem Servomotor ein Sternrelais zugeordnet, das durch den Haupt-Rechner und/oder den Rechner zur Aufbereitung der Sensordaten und/oder den Überwachungsrechner ansteuerbar ist. Durch das Sternrelais werden die Phasen des Servomotors aufgetrennt und somit die elektrische Lenkung abgeschaltet, beispielsweise nach Ablauf der vorgegebenen Zeit für den Notlaufbetrieb.

In einer weiteren bevorzugten Ausführungsform werden die für den Notlaufbetrieb notwendigen Komponenten überwacht, wobei bei Ausfall einer Komponente für den Notlaufbetrieb die elektrische Lenkung abgeschaltet wird und nicht in den Notlaufbetrieb geschaltet wird.

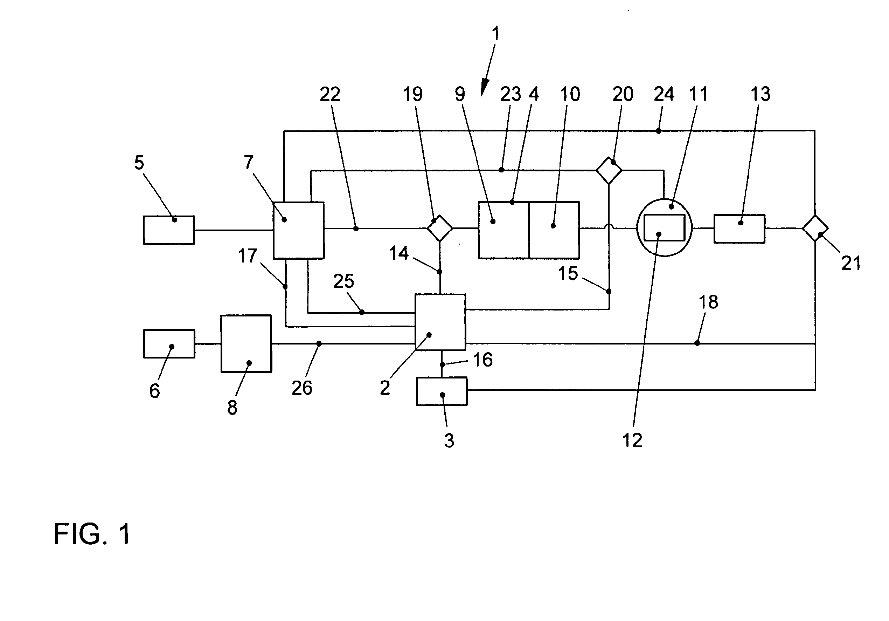

Die Erfindung wird nachfolgend anhand eines bevorzugten Ausführungsbeispiels näher erläutert. Die einzige Figur zeigt ein schematisches Blockschaltbild einer Vorrichtung zur Steuerung einer elektrischen Lenkung.

Die Vorrichtung 1 zur Steuerung einer elektrischen Lenkung umfasst einen Haupt-Rechner 2, einen Überwachungsrechner 3, eine Leistungselektronik 4, einen ersten Sensor 5 und einen zweiten Sensor 6 zur Erfassung eines Drehmomentes an einer Lenkstange, einen ersten Rechner 7 und einen zweiten Rechner 8 zur Aufbereitung der Sensordaten des ersten bzw. zweiten Sensors 5, 6 für den Haupt-Rechner 2. Die Leistungselektronik 4 umfasst eine Gate Drive Unit 9 und eine Leistungsstufe 10, die mit einem elektrischen Servomotor 11 mit einem Resolver 12 verbunden ist. Die Phasen des Servomotors 11 sind in Sternschaltung geschaltet, wobei im Sternpunkt ein Sternrelais 13 angeordnet ist, mittels dessen die Phasen des Servomotors 11 aufgetrennt werden können.

Im Normalbetrieb erhält der Haupt-Rechner 2 von den Rechnern 7 und 8 über die Leitungen 25, 26 die aufbereiteten Sensordaten, in Abhängigkeit derer der Haupt-Rechner 2 ein PWM-Signal für die Gate Drive Unit 9 erzeugt. Dieses PWM-Signal wird über eine Leitung 14 übertragen. Des Weiteren erzeugt der Haupt-Rechner 2 ein Ansteuerungssignal für den Resolver 12, das über eine Leitung 15 übertragen wird. Der Haupt-Rechner 2 weist vorzugsweise zwei Ebenen auf, nämlich eine Funktionsebene und eine interne Überwachungsebene, die die Funktionsebene überwacht. Die interne Überwachungsebene des Haupt-Rechners 2 wird hingegen vom externen Überwachungsrechner 3 überwacht. Hierzu überträgt der Überwachungsrechner 3 Anfragesignale über den Zustand der Überwachungsebene an den Haupt-Rechner 2 über eine Leitung 16, über die der Haupt-Rechner 2 an den Überwachungsrechner 3 antwortet. Entsprechend überwacht der Haupt-Rechner 2 den Rechner 7 über eine Leitung 17. Erfasst nun beispielsweise der Haupt-Rechner 2 einen Fehler in der Leistungselektronik 4 oder des Resolvers 12 oder einen mehrphasigen Fehler des Servomotors 11, so erzeugt der Haupt-Rechner 2 ein Signal zum Abschalten der elektrischen Lenkung. Hierzu überträgt der Haupt-Rechner 2 über einen Abschaltpfad 18 ein Signal zum Ansteuern des Sternrelais 13.

Tritt nun ein Fehler im Haupt-Rechner 2 auf, so wird dies beispielsweise vom Rechner 7 dadurch erkannt, dass der Haupt-Rechner 2 keine Anfragesignale mehr an den Rechner 7 überträgt. Der Rechner 7 schaltet dann die Vorrichtung in einen Notlaufbetrieb um. Hierzu werden die Umschaltpunkte 19, 20, 21 auf den Rechner 7 umgeschaltet. Der Rechner 7 erzeugt dann ein PWM-Signal für die Gate Drive Unit 9, das über eine Leitung 22 übertragen wird. Des Weiteren erzeugt der Rechner 7 ein Ansteuersignal für den Resolver 12, das über eine Leitung 23 übertragen wird. Des Weiteren ist der Rechner 7 über einen Abschaltpfad 24 mit dem Sternrelais 13 verbunden. Über diesen Abschaltpfad 24 kann dann der Rechner 7 die elektrische Lenkung abschalten, wenn beispielsweise eine vorgegebene Zeit für den Notlaufbetrieb abgelaufen ist.

Entsprechend kann auch in den Notlaufbetrieb umgeschaltet werden, wenn der Überwachungsrechner 3 einen Fehler aufweist.

Ergänzend sei angemerkt, dass der Haupt-Rechner 2 und die Rechner 7, 8 vorzugsweise in einem Steuergerät integriert sind.

## Patentansprüche

1. Vorrichtung zur Steuerung einer elektrischen Lenkung, umfassend einen Haupt-Rechner, eine Leistungselektronik, mindestens einen Sensor zur Erfassung eines Drehmomentes an einer Lenkstange sowie mindestens einen Rechner zur Aufbereitung der Sensordaten für den Haupt-Rechner, wobei der Haupt-Rechner in Abhängigkeit der aufbereiteten Sensordaten die Leistungselektronik zur Erzeugung von Steuersignalen für einen elektrischen Servomotor ansteuert,
**dadurch gekennzeichnet, dass**
bei einem Fehler des Haupt-Rechners (2) der Rechner (7) zur Aufbereitung der Sensordaten die Leistungselektronik (4) für einen Notlaufbetrieb ansteuert.

2. Vorrichtung nach Anspruch 1, **dadurch gekennzeichnet, dass** im Normalbetrieb der Haupt-Rechner (2) den Rechner (7) zur Aufbereitung der Sensordaten überwacht, wobei bei Ausfall eines Überwachungssignals der Rechner (7) zur Aufbereitung der Sensordaten auf den Notlaufbetrieb umschaltet.

3. Vorrichtung nach Anspruch 1 oder 2, **dadurch gekennzeichnet, dass** der elektrische Servomotor (11) einen Resolver (12) umfasst, der im Normalbetrieb vom Haupt-Rechner (2) und im Notlaufbetrieb vom Rechner (7) zur Aufbereitung der Sensordaten angesteuert wird.

4. Vorrichtung nach einem der vorangegangenen Ansprüche, **dadurch gekennzeichnet, dass** dem Haupt-Rechner (2) ein Überwachungsrechner (3) zugeordnet ist, wobei bei einem Ausfall des Überwachungsrechners (3) auf den Notlaufbetrieb umgeschaltet wird.

5. Vorrichtung nach einem der vorangegangenen Ansprüche, **dadurch gekennzeichnet, dass** die Vorrichtung (1) einen zweiten Sensor (6) zur Erfassung eines Drehmomentes an einer Lenkstange sowie einen zweiten Rechner (8) zur Aufbereitung der Sensordaten des zweiten Sensors (6) umfasst.

6. Vorrichtung nach einem der vorangegangenen Ansprüche, **dadurch gekennzeichnet, dass** dem Servomotor (11) ein Sternrelais (13) zugeordnet ist, das durch den Haupt-Rechner (2) und/oder den Rechner (7) zur Aufbereitung der Sensordaten und/oder den Überwachungsrechner (3) ansteuerbar ist.

7. Vorrichtung nach einem der vorangegangenen Ansprüche, **dadurch gekennzeichnet, dass** die für den Notlaufbetrieb notwendigen Komponenten überwacht werden, wobei bei Ausfall einer Komponente die elektrische Lenkung abgeschaltet wird.

8. Verfahren zur Steuerung einer elektrischen Lenkung, mittels eines Haupt-Rechners, einer Leistungselektronik, mindestens eines Sensors zur Erfassung eines Drehmoments an einer Lenkstange sowie mindestens eines Rechners zur Aufbereitung der Sensordaten für den Haupt-Rechner, wobei der Haupt-Rechner in Abhängigkeit der aufbereiteten Sensordaten die Leistungselektronik zur Erzeugung von Steuersignalen für einen elektrischen Servomotor ansteuert,
**dadurch gekennzeichnet, dass**
bei einem Fehler des Haupt-Rechners (2) der Rechner (7) zur Aufbereitung der Sensordaten die Leistungselektronik (4) für einen Notlaufbetrieb ansteuert.

9. Verfahren nach Anspruch 8, **dadurch gekennzeichnet, dass** im Normalbetrieb der Haupt-Rechner (2) den Rechner (7) zur Aufbereitung der Sensordaten überwacht, wobei bei Ausfall eines Überwachungssignals der Rechner (7) zur Aufbereitung der Sensordaten auf den Notlaufbetrieb umschaltet.

10. Verfahren nach Anspruch 8 oder 9, **dadurch gekennzeichnet, dass** der elektrische Servomotor (11) einen Resolver (12) umfasst, der im Normalbetrieb vom Haupt-Rechner (2) und im Notlaufbetrieb vom Rechner (7) zur Aufbereitung der Sensordaten angesteuert wird.

11. Verfahren nach einem der Ansprüche 8 bis 10, **dadurch gekennzeichnet, dass** dem Haupt-Rechner (2) ein Überwachungsrechner (3) zugeordnet ist, wobei bei einem Ausfall des Überwachungsrechners (3) auf den Notlaufbetrieb umgeschaltet wird.

12. Verfahren nach einem der Ansprüche 8 bis 11, **dadurch gekennzeichnet, dass** ein zweiter Sensor (6) zur Erfassung eines Drehmoments an einer Lenkstange sowie ein zweiter Rechner (8) zur Aufbereitung der Sensordaten des zweiten Sensors (6) verbunden sind.

13. Verfahren nach einem der Ansprüche 8 bis 12, **dadurch gekennzeichnet, dass** dem Servomotor (11) ein Sternrelais (13) zugeordnet ist, das durch den Haupt-Rechner (2) und/oder den Rechner (7) zur Aufbereitung der Sensordaten und/oder den Überwachungsrechner (3) angesteuert wird.

14. Verfahren nach einem der Ansprüche 8 bis 13, **dadurch gekennzeichnet, dass** die für den Notlaufbetrieb notwendigen Komponenten überwacht werden, wobei bei Ausfall einer Komponente die elektrische Lenkung abgeschaltet wird.

## Claims

1. Device for controlling an electric steering system, comprising a main computer, power electronics, at least one sensor for detecting a torque on a steering rod and at least one computer for preprocessing the sensor data for the main computer, the main computer driving the power electronics to generate control signals for an electric servomotor on the basis of the preprocessed sensor data,
**characterized in that**
in the event of a fault in the main computer (2), the computer (7) for preprocessing the sensor data drives the power electronics (4) for an emergency running mode.

2. Device according to Claim 1, **characterized in that** the main computer (2) monitors the computer (7) for preprocessing the sensor data in the normal mode, the computer (7) for preprocessing the sensor data changing over to the emergency running mode in the absence of a monitoring signal.

3. Device according to Claim 1 or 2, **characterized in that** the electric servomotor (11) comprises a resolver (12) which is driven by the main computer (2) in the normal mode and is driven by the computer (7) for preprocessing the sensor data in the emergency running mode.

4. Device according to one of the preceding claims, **characterized in that** a monitoring computer (3) is associated with the main computer (2), a changeover to the emergency running mode being carried out if the monitoring computer (3) fails.

5. Device according to one of the preceding claims, **characterized in that** the device (1) comprises a second sensor (6) for detecting a torque on a steering rod and a second computer (8) for preprocessing the sensor data from the second sensor (6).

6. Device according to one of the preceding claims, **characterized in that** a star relay (13) is associated with the servomotor (11) and can be driven by the main computer (2) and/or the computer (7) for preprocessing the sensor data and/or the monitoring computer (3).

7. Device according to one of the preceding claims, **characterized in that** the components required for the emergency running mode are monitored, the electric steering system being switched off if a component fails.

8. Method for controlling an electric steering system by means of a main computer, power electronics, at least one sensor for detecting a torque on a steering rod and at least one computer for preprocessing the sensor data for the main computer, the main computer driving the power electronics to generate control signals for an electric servomotor on the basis of the preprocessed sensor data,
**characterized in that**
in the event of a fault in the main computer (2), the computer (7) for preprocessing the sensor data drives the power electronics (4) for an emergency running mode.

9. Method according to Claim 8, **characterized in that** the main computer (2) monitors the computer (7) for preprocessing the sensor data in the normal mode, the computer (7) for preprocessing the sensor data changing over to the emergency running mode in the absence of a monitoring signal.

10. Method according to Claim 8 or 9, **characterized in that** the electric servomotor (11) comprises a resolver (12) which is driven by the main computer (2) in the normal mode and is driven by the computer (7) for preprocessing the sensor data in the emergency running mode.

11. Method according to one of Claims 8 to 10, **characterized in that** a monitoring computer (3) is associated with the main computer (2), a changeover to the emergency running mode being carried out if the monitoring computer (3) fails.

12. Method according to one of Claims 8 to 11, **characterized in that** a second sensor (6) for detecting a torque on a steering rod and a second computer (8) for preprocessing the sensor data from the second sensor (6) are connected.

13. Method according to one of Claims 8 to 12, **characterized in that** a star relay (13) is associated with the servomotor (11) and is driven by the main computer (2) and/or the computer (7) for preprocessing the sensor data and/or the monitoring computer (3).

14. Method according to one of Claims 8 to 13, **characterized in that** the components required for the emergency running mode are monitored, the electric steering system being switched off if a component fails.

## Revendications

1. Dispositif de commande d'une direction électrique, comprenant un ordinateur principal, une électronique de puissance, au moins un capteur pour détecter un couple sur une bielle de direction et aussi au moins un ordinateur pour conditionner les données de capteur pour l'ordinateur principal, l'ordinateur principal commandant l'électronique de puissance en fonction des données de capteur conditionnées pour générer des signaux de commande pour un servomoteur électrique,
**caractérisé en ce**
**qu'**en cas de défaut de l'ordinateur principal (2), l'ordinateur (7) de conditionnement des données de capteur commande l'électronique de puissance (4) pour un fonctionnement de secours.

2. Dispositif selon la revendication 1, **caractérisé en ce qu'**en fonctionnement normal, l'ordinateur principal (2) surveille l'ordinateur (7) de conditionnement des données de capteur, l'ordinateur (7) de conditionnement des données de capteur basculant sur le fonctionnement de secours en cas de défaillance d'un signal de surveillance.

3. Dispositif selon la revendication 1 ou 2, **caractérisé en ce que** le servomoteur électrique (11) comprend un résolveur (12) qui est commandé par l'ordinateur principal (2) en fonctionnement normal et par l'ordinateur (7) de conditionnement des données de capteur en fonctionnement de secours.

4. Dispositif selon l'une des revendications précédentes, **caractérisé en ce qu'**un ordinateur de surveillance (3) est associé à l'ordinateur principal (2), un basculement en fonctionnement de secours ayant lieu en cas de défaillance de l'ordinateur de surveillance (3).

5. Dispositif selon l'une des revendications précédentes, **caractérisé en ce que** le dispositif (1) comprend un deuxième capteur (6) pour détecter un couple sur une bielle de direction ainsi qu'un deuxième ordinateur (8) pour le conditionnement des données de capteur du deuxième capteur (6).

6. Dispositif selon l'une des revendications précédentes, **caractérisé en ce qu'**un relais en étoile (13) est associé au servomoteur (11), lequel peut être commandé par l'ordinateur principal (2) et/ou l'ordinateur (7) de conditionnement des données de capteur et/ou l'ordinateur de surveillance (3).

7. Dispositif selon l'une des revendications précédentes, **caractérisé en ce que** les composants nécessaires pour le fonctionnement de secours sont surveillés, la direction électrique étant mise hors circuit en cas de défaillance d'un composant.

8. Procédé de commande d'une direction électrique, au moyen d'un ordinateur principal, d'une électronique de puissance, d'au moins un capteur pour détecter un couple sur une bielle de direction et aussi d'au moins un ordinateur pour conditionner les données de capteur pour l'ordinateur principal, l'ordinateur principal commandant l'électronique de puissance en fonction des données de capteur conditionnées pour générer des signaux de commande pour un servomoteur électrique,
**caractérisé en ce**
**qu'**en cas de défaut de l'ordinateur principal (2), l'ordinateur (7) de conditionnement des données de capteur commande l'électronique de puissance (4) pour un fonctionnement de secours.

9. Procédé selon la revendication 8, **caractérisé en ce qu'**en fonctionnement normal, l'ordinateur principal (2) surveille l'ordinateur (7) de conditionnement des données de capteur, l'ordinateur (7) de conditionnement des données de capteur basculant sur le fonctionnement de secours en cas de défaillance d'un signal de surveillance.

10. Procédé selon la revendication 8 ou 9, **caractérisé en ce que** le servomoteur électrique (11) comprend un résolveur (12) qui est commandé par l'ordinateur principal (2) en fonctionnement normal et par l'ordinateur (7) de conditionnement des données de capteur en fonctionnement de secours.

11. Procédé selon l'une des revendications 8 à 10, **caractérisé en ce qu'**un ordinateur de surveillance (3) est associé à l'ordinateur principal (2), un basculement en fonctionnement de secours ayant lieu en cas de défaillance de l'ordinateur de surveillance (3).

12. Procédé selon l'une des revendications 8 à 11, **caractérisé en ce qu'**un deuxième capteur (6) pour détecter un couple sur une bielle de direction ainsi qu'un deuxième ordinateur (8) pour le conditionnement des données de capteur du deuxième capteur (6) sont reliés.

13. Procédé selon l'une des revendications 8 à 12, **caractérisé en ce qu'**un relais en étoile (13) est associé au servomoteur (11), lequel est commandé par l'ordinateur principal (2) et/ou l'ordinateur (7) de conditionnement des données de capteur et/ou l'ordinateur de surveillance (3).

14. Procédé selon l'une des revendications 8 à 13, **caractérisé en ce que** les composants nécessaires pour le fonctionnement de secours sont surveillés, la direction électrique étant mise hors circuit en cas de défaillance d'un composant.
